(19) Europäisches Patentamt
European Patent Office
Office européen des brevets

(11) EP 3 177 145 B1

(12) **EUROPEAN PATENT SPECIFICATION**

(45) Date of publication and mention of the grant of the patent:
**01.11.2023 Bulletin 2023/44**

(21) Application number: **15829370.4**

(22) Date of filing: **08.08.2015**

(51) International Patent Classification (IPC):
***A01N 43/40*** *(2006.01)* ***A01N 43/653*** *(2006.01)*
***A01P 3/00*** *(2006.01)*

(52) Cooperative Patent Classification (CPC):
(C-Sets available)
**A01N 43/40** (Cont.)

(86) International application number:
**PCT/US2015/044383**

(87) International publication number:
**WO 2016/023013 (11.02.2016 Gazette 2016/06)**

# (54) SYNERGISTIC FUNGICIDAL MIXTURES FOR FUNGAL CONTROL IN CEREALS

SYNERGISTISCHE FUNGIZIDE GEMISCHE ZUR PILZBEKÄMPFUNG IN GETREIDEPFLANZEN

MÉLANGES FONGICIDES SYNERGIQUES DESTINÉS À LUTTER CONTRE LES CHAMPIGNONS DANS LES CÉRÉALES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.08.2014 US 201462035198 P**

(43) Date of publication of application:
**14.06.2017 Bulletin 2017/24**

(73) Proprietor: **Corteva Agriscience LLC**
**Indianapolis, IN 46268 (US)**

(72) Inventor: **SCHULZ, Thomas**
**09600 Niederschoena (DE)**

(74) Representative: **f & e patent**
**Braunsberger Feld 29**
**51429 Bergisch Gladbach (DE)**

(56) References cited:

| | |
|---|---|
| **EP-A1- 3 141 118** | **WO-A1-2015/005355** |
| **WO-A1-2015/103161** | **WO-A1-2015/103161** |
| **US-A1- 2011 082 160** | **US-A1- 2011 082 160** |
| **US-A1- 2014 187 587** | **US-A1- 2014 187 590** |

- **SHEILA J. KENDALL ET AL: "Changes in sensitivity to DMI fungicides in Rhynchosporium secalis", CROP PROTECTION, vol. 12, no. 5, 1 August 1993 (1993-08-01) , pages 357-362, XP055022927, ISSN: 0261-2194, DOI: 10.1016/0261-2194(93)90078-W**
- **L.R. COOKE ET AL: "The effect of fungicide programmes based on epoxiconazole on the control and DMI sensitivity of Rhynchosporium secalis in winter barley", CROP PROTECTION., vol. 23, no. 5, 1 May 2004 (2004-05-01), pages 393-406, XP55422430, GB ISSN: 0261-2194, DOI: 10.1016/j.cropro.2003.09.009**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**A01N 43/40, A01N 43/653**

## Description

### Field

This disclosure concerns the use of a synergistic fungicidal composition containing (a) a compound of Formula I, (3*S*,6*S*,7*R*,8*R*)-8-benzyl-3-(3-((isobutyryloxy)methoxy)-4-methoxypicolinamido)-6-methyl-4,9-di oxo-1,5-dioxonan-7-yl isobutyrate, (b) the ergosterol biosynthesis-inhibitor fungicide prothioconazole, wherein the weight ratio of the compound of Formula I to prothioconazole is from 100:195 to 130:195, and a phytologically acceptable carrier material, wherein improved growth in crops is characterized by at least one of the effects selected from the group consisting of preventing or curing a disease caused by the pathogenic fungi *Rhynchosporium secalis* (RHYNSE), the causal agent of leaf blotch of barley, and improving plant physiology, wherein improved plant physiology is characterized by at least one of the effects selected from the group consisting of improved greening and enhanced yield. It further concerns a method for improving growth in crops, the method comprising: applying a fungicidally effective amount of a synergistic mixture comprising a compound of Formula I and prothioconazole, wherein said effective amount is applied to at least one of a plant, an area adjacent to a plant, soil adapted to support growth of a plant, a root of a plant, and foliage of a plant, wherein the weight ratio of the compound of Formula I to prothioconazole is from 100:195 to 130:195, wherein the synergistic mixture is effective against leaf blotch of barley caused by the pathogenic fungi is *Rhynchosporium secalis*.

### Background

Fungicides are compounds, of natural or synthetic origin, which act to protect plants against damage caused by fungi. Current methods of agriculture rely heavily on the use of fungicides. In fact, some crops cannot be grown usefully without the use of fungicides. Using fungicides allows a grower to increase the yield and the quality of the crop, and consequently, increase the value of the crop. In most situations, the increase in value of the crop is worth at least three times the cost of the use of the fungicide.

However, no one fungicide is useful in all situations and repeated usage of a single fungicide frequently leads to the development of resistance to that and related fungicides. Consequently, research is being conducted to produce fungicides and combinations of fungicides that are safer, that have better performance, that require lower dosages, that are easier to use, and that cost less.

Synergism occurs when the effect of two or more compounds exceeds the effect of the compounds when used alone.

US 2014/0187590 A1 discloses synergistic fungicidal compositions comprising (3*S*,6*S*,7*R*,8*R*)-8-benzyl-3-(3-((isobutyryloxy)methoxy)-4-methoxypicolinamido)-6-methyl-4,9-dioxo-1,5-dioxonan-7-yl isobutyrate and at least one triazole fungicide. US 2011/0082160 A1 discloses synergistic fungicidal mixtures for the control of *Septoria tritici* and *Puccinia recondita*. The mixtures may comprise, among others, (3*S*,6*S*,7*R*,8*R*)-8-benzyl-3-(3-((isobutyryloxy)methoxy)-4-methoxypicolinamido)-6-methyl-4,9-dioxo-1,5-dioxonan-7-yl isobutyrate and prothioconazole. WO 2015/103161 A1 relates to synergistic fungicidal compositions comprising (3*S*,6*S*,7*R*,8*R*)-8-benzyl-3-(3-((isobutyryloxy)methoxy)-4-methoxypicolinamido)-6-methyl-4,9-dioxo-1,5-dioxonan-7-yl isobutyrate and at least one fungicide selected from benzovindiflupyr and penthiopyrad.

### Summary

It is an object of this disclosure to provide a use of synergistic compositions comprising fungicidal compounds. It is a further object of this disclosure to provide processes that use these synergistic compositions. The synergistic compositions are capable of preventing or curing, or both, a disease caused by the pathogenic fungi *Rhynchosporium secalis* (RHYNSE), the causal agent of leaf blotch of barley,. In addition, the synergistic compositions are capable of providing improved growth in crops, wherein the growth improvement is characterized by at least one of the effects selected from the group consisting of preventing or curing pathogenic fungi and improving plant physiology, wherein improved plant physiology is characterized by at least one of the effects selected from the group consisting of improved greening and enhanced yield. In accordance with this disclosure, synergistic compositions are provided along with methods for their use.

### Detailed Description

The present disclosure concerns the use of a synergistic composition comprising a synergistic fungicidal mixture comprising a fungicidally effective amount of (a) a compound of Formula I, (3*S*,6*S*,7*R*,8*R*)-8-benzyl-3-(3-((isobutyryloxy)methoxy)-4-methoxypicolinamido)-6-methyl-4,9-dioxo-1,5-dioxonan-7-yl isobutyrate, and (b) prothioconazole, wherein the weight ratio of the compound of Formula I to prothioconazole is from 100:195 to 130:195, and a phytologically

acceptable carrier material, wherein improved growth in crops is characterized by at least one of the effects selected from the group consisting of preventing or curing a disease caused by the pathogenic fungi Rhynchosporium secalis (RHYNSE), the causal agent of leaf blotch of barley, and improving plant physiology, wherein improved plant physiology is characterized by at least one of the effects selected from the group consisting of improved greening and enhanced yield.

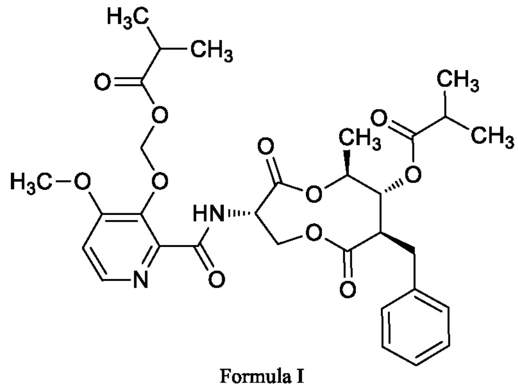

Formula I

As used herein, prothioconazole is the common name 2-[(2*RS*)-2-(1-chlorocyclopropyl)-3-(2-chlorophenyl)-2-hydroxypropyl]-2*H*-1,2,4-triazole-3(4*H*)-thione and possesses the following structure:

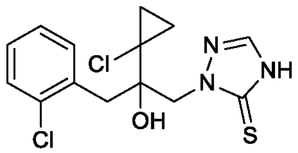

Its fungicidal activity is described in *The Pesticide Manual*, Fifteenth Edition, 2009. Prothioconazole provides control of diseases such as eyespot (*Pseudocercosporella herpotrichoides*), Fusarium ear blight (*Fusarium* spp., *Microdochium nivale*), leaf blotch diseases (*Septoria tritici*, *Leptosphaeria nodorum*, *Pyrenophora* spp., *Rhynchosporium secalis*, etc.), rust (*Puccinia* spp.) and powdery mildew (*Blumeria graminis*), by foliar application, in wheat, barley and other crops.

In the compositions described herein, the weight ratios of the compound of Formula I at which the synergistic effects with prothioconazole are observed lie within the range of about 100:195 and about 130:195.

The rate at which the synergistic composition is applied will depend upon the degree of control required and the timing and method of application. In general, the composition of the disclosure can be applied at an application rate of between about 25 grams per hectare (g/ha) and about 850 g/ha based on the total amount of active ingredients in the composition.

The synergistic composition comprising the compound of Formula I and prothioconazole is applied at a rate between about 60 g/ha and about 600 g/ha. Prothioconazole is applied at a rate between about 25 g/ha and about 300 g/ha and the compound of Formula I is applied at a rate between about 35 g/ha and about 300 g/ha. In a more particular embodiment, prothioconazole is applied at a rate between about 100 g/ha and 200 g/ha, even more particularly about 195 g/ha, and the compound of Formula 1 is applied at a rate between about 75 g/ha and 150 g/ha, even more particularly between about 100 g/ha and 130 g/ha.

The components of the synergistic mixture of the present disclosure can be applied either separately or as part of a multipart fungicidal system.

The synergistic mixture of the present disclosure can be applied in conjunction with one or more other fungicides to control a wider variety of undesirable diseases. When used in conjunction with other fungicide(s), the presently claimed compounds may be formulated with the other fungicide(s), tank mixed with the other fungicide(s) or applied sequentially with the other fungicide(s). Such other fungicides may include 2-(thiocyanatomethylthio)-benzothiazole, 2-phenylphenol, 8-hydroxyquinoline sulfate, ametoctradin, amisulbrom, antimycin, *Ampelomyces quisqualis*, azaconazole, azoxystrobin, *Bacillus subtilis*, *Bacillus subtilis* strain QST713, benalaxyl, benomyl, benthiavalicarbisopropyl, benzylaminobenzenesulfonate (BABS) salt, bicarbonates, biphenyl, bismerthiazol, bitertanol, bixafen, blasticidin-S, borax, Bordeaux mixture, boscalid, bromuconazole, bupirimate, calcium polysulfide, captafol, captan, carbendazim, carboxin, carpropamid, carvone, chlazafenone, chloroneb, chlorothalonil, chlozolinate, *Coniothyrium minitans*, copper hydroxide, copper octanoate, copper oxychloride, copper sulfate, copper sulfate (tribasic), cuprous oxide, cyazofamid, cyflufenamid, cymoxanil, cyproconazole, cyprodinil, dazomet, debacarb, diammonium ethylenebis-(dithiocarbamate), dichlofluanid, dichlorophen,

diclocymet, diclomezine, dichloran, diethofencarb, difenoconazole, difenzoquat ion, diflumetorim, dimethomorph, dimoxystrobin, diniconazole, diniconazole-M, dinobuton, dinocap, diphenylamine, dithianon, dodemorph, dodemorph acetate, dodine, dodine free base, edifenphos, enestrobin, enestroburin, epoxiconazole, ethaboxam, ethoxyquin, etridiazole, famoxadone, fenamidone, fenarimol, fenbuconazole, fenfuram, fenhexamid, fenoxanil, fenpiclonil, fenpropidin, fenpropimorph, fenpyrazamine, fentin, fentin acetate, fentin hydroxide, ferbam, ferimzone, fluazinam, fludioxonil, flumorph, fluopicolide, fluopyram, fluoroimide, fluoxastrobin, fluquinconazole, flusilazole, flusulfamide, flutianil, flutolanil, flutriafol, fluxapyroxad, folpet, formaldehyde, fosetyl, fosetyl-aluminium, fuberidazole, furalaxyl, furametpyr, guazatine, guazatine acetates, GY-81, hexachlorobenzene, hexaconazole, hymexazol, imazalil, imazalil sulfate, imibenconazole, iminoctadine, iminoctadine triacetate, iminoctadine tris(albesilate), iodocarb, ipconazole, ipfenpyrazolone, iprobenfos, iprodione, iprovalicarb, isoprothiolane, isopyrazam, isotianil, kasugamycin, kasugamycin hydrochloride hydrate, kresoxim-methyl, laminarin, mancopper, mancozeb, mandipropamid, maneb, mefenoxam, mepanipyrim, mepronil, meptyl-dinocap, mercuric chloride, mercuric oxide, mercurous chloride, metalaxyl, metalaxyl-M, metam, metam-ammonium, metam-potassium, metam-sodium, metconazole, methasulfocarb, methyl iodide, methyl isothiocyanate, metiram, metominostrobin, metrafenone, mildiomycin, myclobutanil, nabam, nitrothal-isopropyl, nuarimol, octhilinone, ofurace, oleic acid (fatty acids), orysastrobin, oxadixyl, oxine-copper, oxpoconazole fumarate, oxycarboxin, pefurazoate, penconazole, pencycuron, penflufen, pentachlorophenol, pentachlorophenyl laurate, penthiopyrad, phenylmercury acetate, phosphonic acid, phthalide, picoxystrobin, polyoxin B, polyoxins, polyoxorim, potassium bicarbonate, potassium hydroxyquinoline sulfate, probenazole, prochloraz, procymidone, propamocarb, propamocarb hydrochloride, propiconazole, propineb, proquinazid, pyraclostrobin, pyrametostrobin, pyraoxystrobin, pyrazophos, pyribencarb, pyributicarb, pyrifenox, pyrimethanil, pyriofenone, pyroquilon, quinoclamine, quinoxyfen, quintozene, *Reynoutria sachalinensis* extract, sedaxane, silthiofam, simeconazole, sodium 2-phenylphenoxide, sodium bicarbonate, sodium pentachlorophenoxide, spiroxamine, sulfur, SYP-Z048, tar oils, tebuconazole, tebufloquin, tecnazene, tetraconazole, thiabendazole, thifluzamide, thiophanate-methyl, thiram, tiadinil, tolclofos-methyl, tolylfluanid, triadimefon, triadimenol, triazoxide, tricyclazole, tridemorph, trifloxystrobin, triflumizole, triforine, triticonazole, validamycin, valifenalate, valiphenal, vinclozolin, zineb, ziram, zoxamide, *Candida oleophila*, *Fusarium oxysporum*, *Gliocladium* spp., *Phlebiopsis gigantea*, *Streptomyces griseoviridis*, *Trichoderma* spp., (*RS*)-*N*-(3,5-dichlorophenyl)-2-(methoxymethyl)-succinimide, 1,2-dichloropropane, 1,3-dichloro-1,1,3,3-tetrafluoroacetone hydrate, 1-chloro-2,4-dinitronaphthalene, 1-chloro-2-nitropropane, 2-(2-heptadecyl-2-imidazolin-1-yl)ethanol, 2,3-dihydro-5-phenyl-1,4-dithi-ine 1,1,4,4-tetraoxide, 2-methoxyethylmercury acetate, 2-methoxyethylmercury chloride, 2-methoxyethylmercury silicate, 3-(4-chlorophenyl)-5-methylrhodanine, 4-(2-nitroprop-1-enyl)phenyl thiocyanateme, ampropylfos, anilazine, azithiram, barium polysulfide, Bayer 32394, benodanil, benquinox, bentaluron, benzamacril; benzamacril-isobutyl, benzamorf, binapacryl, bis(methylmercury) sulfate, bis(tributyltin) oxide, buthiobate, cadmium calcium copper zinc chromate sulfate, carbamorph, CECA, chlobenthiazone, chloraniformethan, chlorfenazole, chlorquinox, climbazole, copper bis(3-phenylsalicylate), copper zinc chromate, cufraneb, cupric hydrazinium sulfate, cuprobam, cyclafuramid, cypendazole, cyprofuram, decafentin, dichlone, dichlozoline, diclobutrazol, dimethirimol, dinocton, dinosulfon, dinoterbon, dipyrithione, ditalimfos, dodicin, drazoxolon, EBP, ESBP, etaconazole, etem, ethirim, fenaminosulf, fenapanil, fenitropan, fluotrimazole, furcarbanil, furconazole, furconazole-cis, furmecyclox, furophanate, glyodine, griseofulvin, halacrinate, Hercules 3944, hexylthiofos, ICIA0858, isopamphos, isovaledione, mebenil, mecarbinzid, metazoxolon, methfuroxam, methylmercury dicyandiamide, metsulfovax, milneb, mucochloric anhydride, myclozolin, *N*-3,5-dichlorophenyl-succinimide, *N*-3-nitrophenylitaconimide, natamycin, *N*-ethylmercurio-4-toluenesulfonanilide, nickel bis(dimethyldithiocarbamate), OCH, phenylmercury dimethyldithiocarbamate, phenylmercury nitrate, phosdiphen, prothiocarb; prothiocarb hydrochloride, pyracarbolid, pyridinitril, pyroxychlor, pyroxyfur, quinacetol; quinacetol sulfate, quinazamid, quinconazole, rabenzazole, salicylanilide, SSF-109, sultropen, tecoram, thiadifluor, thicyofen, thiochlorfenphim, thiophanate, thioquinox, tioxymid, triamiphos, triarimol, triazbutil, trichlamide, urbacid, zarilamid, and any combinations thereof.

The compositions of the present disclosure are applied in the form of a formulation comprising a composition of (a) a compound of Formula I and (b) prothioconazole, together with a phytologically acceptable carrier.

Concentrated formulations can be dispersed in water, or another liquid, for application, or formulations can be dust-like or granular, which can then be applied without further treatment. The formulations are prepared according to procedures which are conventional in the agricultural chemical art, but which are novel and important because of the presence therein of a synergistic composition.

The formulations that are applied most often are aqueous suspensions or emulsions. Either such water-soluble, water-suspendable, or emulsifiable formulations are solids, usually known as wettable powders, or liquids, usually known as emulsifiable concentrates, aqueous suspensions, or suspension concentrates. The present disclosure contemplates all vehicles by which the synergistic compositions can be formulated for delivery and use as a fungicide.

As will be readily appreciated, any material to which these synergistic compositions can be added may be used, provided they yield the desired utility without significant interference with the activity of these synergistic compositions as antifungal agents.

Wettable powders, which may be compacted to form water-dispersible granules, comprise an intimate mixture

of the synergistic composition, a carrier and agriculturally acceptable surfactants. The concentration of the synergistic composition in the wettable powder is usually from about 10% to about 90% by weight, more preferably about 25% to about 75% by weight, based on the total weight of the formulation. In the preparation of wettable powder formulations, the synergistic composition can be compounded with any of the finely divided solids, such as prophyllite, talc, chalk, gypsum, Fuller's earth, bentonite, attapulgite, starch, casein, gluten, montmorillonite clays, diatomaceous earths, purified silicates or the like. In such operations, the finely divided carrier is ground or mixed with the synergistic composition in a volatile organic solvent. Effective surfactants, comprising from about 0.5% to about 10% by weight of the wettable powder, include sulfonated lignins, naphthalenesulfonates, alkylbenzenesulfonates, alkyl sulfates, and non-ionic surfactants, such as ethylene oxide adducts of alkyl phenols.

Emulsifiable concentrates of the synergistic composition comprise a convenient concentration, such as from about 10% to about 50% by weight, in a suitable liquid, based on the total weight of the emulsifiable concentrate formulation. The components of the synergistic compositions, jointly or separately, are dissolved in a carrier, which is either a water-miscible solvent or a mixture of water-immiscible organic solvents, and emulsifiers. The concentrates may be diluted with water and oil to form spray mixtures in the form of oil-in-water emulsions. Useful organic solvents include aromatics, especially the high-boiling naphthalenic and olefinic portions of petroleum such as heavy aromatic naphtha. Other organic solvents may also be used, such as, for example, terpenic solvents, including rosin derivatives, aliphatic ketones, such as cyclohexanone, and complex alcohols, such as 2-ethoxyethanol.

Emulsifiers which can be advantageously employed herein can be readily determined by those skilled in the art and include various nonionic, anionic, cationic and amphoteric emulsifiers, or a blend of two or more emulsifiers. Examples of nonionic emulsifiers useful in preparing the emulsifiable concentrates include the polyalkylene glycol ethers and condensation products of alkyl and aryl phenols, aliphatic alcohols, aliphatic amines or fatty acids with ethylene oxide, propylene oxides such as the ethoxylated alkyl phenols and carboxylic esters solubilized with the polyol or polyoxyalkylene. Cationic emulsifiers include quaternary ammonium compounds and fatty amine salts. Anionic emulsifiers include the oil-soluble salts (e.g., calcium) of alkylaryl sulfonic acids, oil-soluble salts or sulfated polyglycol ethers and appropriate salts of phosphated polyglycol ether.

Representative organic liquids which can be employed in preparing the emulsifiable concentrates of the present disclosure are the aromatic liquids such as xylene, propyl benzene fractions, or mixed naphthalene fractions, mineral oils, substituted aromatic organic liquids such as dioctyl phthalate, kerosene, dialkyl amides of various fatty acids, particularly the dimethyl amides of fatty glycols and glycol derivatives such as the n-butyl ether, ethyl ether or methyl ether of diethylene glycol, and the methyl ether of triethylene glycol. Mixtures of two or more organic liquids are also often suitably employed in the preparation of the emulsifiable concentrate. The preferred organic liquids are xylene, and propyl benzene fractions, with xylene being most preferred. The surface-active dispersing agents are usually employed in liquid formulations and in the amount of from 0.1 to 20 percent by weight of the combined weight of the dispersing agent with the synergistic compositions. The formulations can also contain other compatible additives, for example, plant growth regulators and other biologically active compounds used in agriculture.

Aqueous suspensions comprise suspensions of one or more water-insoluble compounds, dispersed in an aqueous vehicle at a concentration in the range from about 5% to about 70% by weight, based on the total weight of the aqueous suspension formulation. Suspensions are prepared by finely grinding the components of the synergistic combination either together or separately, and vigorously mixing the ground material into a vehicle comprised of water and surfactants chosen from the same types discussed above. Other ingredients, such as inorganic salts and synthetic or natural gums, may also be added to increase the density and viscosity of the aqueous vehicle. It is often most effective to grind and mix at the same time by preparing the aqueous mixture and homogenizing it in an implement such as a sand mill, ball mill, or piston-type homogenizer.

The synergistic composition may also be applied as a granular formulation, which is particularly useful for applications to the soil. Granular formulations usually contain from about 0.5% to about 10% by weight of the compounds, based on the total weight of the granular formulation, dispersed in a carrier which consists entirely or in large part of coarsely divided attapulgite, bentonite, diatomite, clay or a similar inexpensive substance. Such formulations are usually prepared by dissolving the synergistic composition in a suitable solvent and applying it to a granular carrier which has been preformed to the appropriate particle size, in the range of from about 0.5 to about 3 mm. Such formulations may also be prepared by making a dough or paste of the carrier and the synergistic composition, and crushing and drying to obtain the desired granular particle.

Dusts containing the synergistic composition are prepared simply by intimately mixing the synergistic composition in powdered form with a suitable dusty agricultural carrier, such as, for example, kaolin clay, ground volcanic rock, and the like. Dusts can suitably contain from about 1% to about 10% by weight of the synergistic composition/carrier combination.

The formulations may contain agriculturally acceptable adjuvant surfactants to enhance deposition, wetting and penetration of the synergistic composition onto the target crop and organism. These adjuvant surfactants may optionally be employed as a component of the formulation or as a tank mix. The amount of adjuvant surfactant will vary

from 0.01 percent to 1.0 percent volume/volume (v/v) based on a spray-volume of water, preferably 0.05 to 0.5 percent. Suitable adjuvant surfactants include ethoxylated nonyl phenols, ethoxylated synthetic or natural alcohols, salts of the esters or sulfosuccinic acids, ethoxylated organosilicones, ethoxylated fatty amines and blends of surfactants with mineral or vegetable oils.

The formulations may optionally include combinations that can comprise at least 1% by weight of one or more of the synergistic compositions with another pesticidal compound. Such additional pesticidal compounds may be fungicides, insecticides, nematocides, miticides, arthropodicides, bactericides or combinations thereof that are compatible with the synergistic compositions of the present disclosure in the medium selected for application, and not antagonistic to the activity of the present compounds. Accordingly, in such embodiments the other pesticidal compound is employed as a supplemental toxicant for the same or for a different pesticidal use. The pesticidal compound and the synergistic composition can generally be mixed together in a weight ratio of from 1: 100 to 100:1.

The present disclosure includes within its scope methods for the control or prevention of fungal attack and methods for providing improved plant physiology, wherein improved plant physiology is characterized by at least one of the effects selected from the group consisting of improved greening and enhanced yield. These methods comprise applying to the locus of the fungus, or to a locus in which the infestation is to be prevented (for example applying to barley plants), a fungicidally effective amount of the synergistic composition. The synergistic composition is suitable for treatment of various plants at fungicidal levels, while exhibiting low phytotoxicity. The synergistic composition is useful in a protectant or eradicant fashion. The synergistic composition is applied by any of a variety of known techniques, either as the synergistic composition or as a formulation comprising the synergistic composition. For example, the synergistic compositions may be applied to the roots, seeds or foliage of plants for the control of *Rhynchosporium secalis*, without damaging the commercial value of the plants. The synergistic composition is applied in the form of any of the generally used formulation types, for example, as solutions, dusts, wettable powders, flowable concentrates, or emulsifiable concentrates. These materials are conveniently applied in various known fashions.

The synergistic composition has been found to have significant fungicidal effect, particularly for agricultural use. Additionally, the synergistic composition has been found to promote improved plant physiology, wherein improved plant physiology is characterized by improved greening and enhanced yield. The synergistic composition is particularly effective for use with agricultural crops and horticultural plants, or with wood, paint, leather or carpet backing.

The synergistic composition is effective in controlling leaf blotch of barley (*Rhynchosporium secalis*; Bayer code RHYNSE). It will be understood by those in the art that the efficacy of the synergistic compositions for the foregoing fungus establishes the general utility of the synergistic compositions as fungicides.

The synergistic compositions have a broad range of efficacy as a fungicide. The exact amount of the synergistic composition to be applied is dependent not only on the relative amounts of the components, but also on the particular action desired, and the stage of growth of the fungal species to be controlled, as well as the part of the plant or other product to be contacted with the synergistic composition. Thus, formulations containing the synergistic composition may not be equally effective at similar concentrations.

The synergistic compositions are effective in use with plants in a disease-inhibiting and phytologically acceptable amount. The term "disease-inhibiting and phytologically acceptable amount" refers to an amount of the synergistic composition that kills or inhibits the plant disease for which control is desired, but is not significantly toxic to the plant. The exact concentration of synergistic composition required varies with the fungal disease to be controlled, the type of formulation employed, the method of application, the particular plant species, climate conditions, and the like.

The present compositions can be applied to fungi or their locus by the use of conventional ground sprayers, granule applicators, and by other conventional means known to those skilled in the art.

The following examples are provided to further illustrate the disclosure. They are not meant to be construed as limiting the disclosure.

## Examples

### Evaluation of Improved Plant Physiology Including Yield Enhancement and Improved Greening of Fungicide Mixtures vs. Leaf Blotch of Barley (*Rhynchosporium secalis*; Bayer code RHYNSE):

The results in Tables 1 - 3 were generated using foliar applied applications in small plot (2.5 x 8.0 meters (m)) research experiments to evaluate the compositions in winter barley (*Hordeum vulgare*, HORVW). Two treatments were applied at crop stages BBCH 31 and 43 - 49, respectively. Applications were made using a backpack sprayer (250kPa) equipped with a 2.5 m spray boom fitted with 5 Agrotop-AM11002 flat fan nozzles spaced at 50 centimeters (cm) oriented at 90 degrees. The output volume of the compositions, diluted in water, was 200 liters per hectare (L/ha). Visual assessments for the control of leaf blotch of barley (*Rhynchosporium secalis*, RHYNSE) were reported as percent (%) infected leaf area and were conducted at the time of application 1 (untreated check at BBCH 31), at the time of application 2 (BBCH 43 - 49), and at 2 - 4 weeks after application 2. Improved plant health was measured through the visual assessment

of % green leaf area 6 weeks after application 2 at growth stage BBCH 75 - 77. The values reported are means from 4 replicates and statistical differences were determined using Duncan's New MRT (P = 0.5).

Colby's equation was used to determine the fungicidal effects expected from the mixtures. (See Colby, S. R. Calculation of the synergistic and antagonistic response of herbicide combinations. Weeds 1967, 15, 20 - 22.)

The following equation was used to calculate the expected activity of mixtures containing two active ingredients, A and B:

$$\text{Expected} = A + B - (A \times B/100)$$

A = observed efficacy of active component A at the same concentration as used in the mixture;
B = observed efficacy of active component B at the same concentration as used in the mixture.

The ability of the compositions described herein to afford suitable disease control is illustrated by the efficacy data in Table 1 and representative synergistic interactions of the compositions with regard to increased yield and improved plant health are presented in Tables 2-3, respectively.

Table 1. Biological Activity Observed with Synergistic Mixtures of Compounds of Formula I and Prothioconazole in Applications on Winter Barley (*Hordeum vulgare*, HORVW) to Control Leaf Blotch of Barley (*Rhnchosorium secalis*; Bayer code RHYNSE).

| Composition | Rates (g ai/ha)* | Visible Lesions | % Reduction of Visible Lesions* |
|---|---|---|---|
| Cmpd. I + Prothioconazole | 0.0 + 195.0 | 1.2 | 85.7 |
| Cmpd. I + Prothioconazole | 100.0 + 195.0 | 1.7 | 79.8 |
| Cmpd. I + Prothioconazole | 130.0 + 195.0 | 1.5 | 82.1 |
| Cmpd. I + Prothioconazole | 100.0 + 0.0 | 2.9 | 65.4 |
| Cmpd. I + Prothioconazole | 130.0 + 0.0 | 2.7 | 67.8 |
| Cmpd. I + Prothioconazole | 0.0 + 0.0 | 8.4 | --- |

*g ai/h = grams active ingredient / hectare.
*% Reduction of Visible Lesions = (Visible Lesions on the Untreated - Visible Lesions on the Treated) / Visible Lesions on the Untreated x 100.

Table 2. Yield Improvement Observed with Synergistic Mixtures of Compounds of Formula I and Prothioconazole in Applications on Winter Barley (*Hordeum vulgare*, HORVW) to Control Leaf Blotch of Barley (*Rhnchosorium secalis*; Bayer code RHYNSE).

| Composition | Rates (g ai/ha) | Increase in Yield Ratio of Treated : Untreated* (Raw Yield Data)* | | Synergy Factor * |
|---|---|---|---|---|
| | | Observed | Expected | |
| Cmpd. I + Prothioconazole | 0.0 + 195.0 | 8.3% (5.77) | --- | --- |
| Cmpd. I + Prothioconazole | 100.0 + 195.0 | 13.2% (6.02) | 8.5% | 1.55 |
| Cmpd. I + Prothioconazole | 130.0 + 195.0 | 15.7% (6.15) | 11.2% | 1.40 |
| Cmpd. I + Prothioconazole | 100.0 + 0.0 | 0.2% (5.33) | --- | --- |
| Cmpd. I + Prothioconazole | 130.0 + 0.0 | 3.2% (5.49) | --- | --- |

(continued)

| Composition | Rates (g ai/ha) | Increase in Yield Ratio of Treated : Untreated* (Raw Yield Data)* | | Synergy Factor * |
|---|---|---|---|---|
| | | Observed | Expected | |
| Untreated | --- | 100% (5.32) | | --- |
| *g ai/h = grams active ingredient / hectare.<br>*% Increase in Yield Ratio of Treated : Untreated* = (Observed Yield / Untreated Yield) x 100 - 100.<br>*Synergy Factor = Observed % Yield Increase / Expected % Yield Increase.<br>*Observed Raw Yield Data Is Measured in Metric Tons / Hectare (t/ha). | | | | |

Table 3. Plant Greening Improvements Observed with Synergistic Mixtures of Compounds of Formula I and Prothioconazole in Applications on Winter Barley (*Hordeum vulgare*, HORVW) to Control Leaf Blotch of Barley (*Rhynchosporium secalis*; Bayer code RHYNSE).

| Composition | Rates (g ai/ha)* | Increase in % Green Leaftop Ratio of Treated : Untreated* (Raw %Green Leaftop) | | Synergy Factor* |
|---|---|---|---|---|
| | | Observed | Expected | |
| Cmpd. I + Prothioconazole | 0.0 + 195.0 | 153.3% (76%) | --- | --- |
| Cmpd. I + Prothioconazole | 100.0 + 195.0 | 183.3% (85%) | 153.3% (83.2%) | 1.2 |
| Cmpd. I + Prothioconazole | 130.0 + 195.0 | 200% (90%) | 142.6% (84.6%) | 1.4 |
| Cmpd. I + Prothioconazole | 100.0 + 0.0 | 0% (30%) | --- | --- |
| Cmpd. I + Prothioconazole | 130.0 + 0.0 | 20% (36%) | --- | --- |
| Untreated | --- | 100% (30%) | | --- |
| *g ai/h = grams active ingredient / hectare.<br>*% Increase in % Green Leaftop Ratio of Treated : Untreated = (Observed % Green Leaftop / Untreated % Green Leaftop) x 100 - 100.<br>*Synergy Factor = Observed % Green Leaftop / Expected % Green Leaftop. | | | | |

## Claims

**1.** Use of a synergistic composition for providing improved growth in crops, wherein the composition comprises a synergistic mixture comprising a fungicidally effective amount of a compound of Formula I:

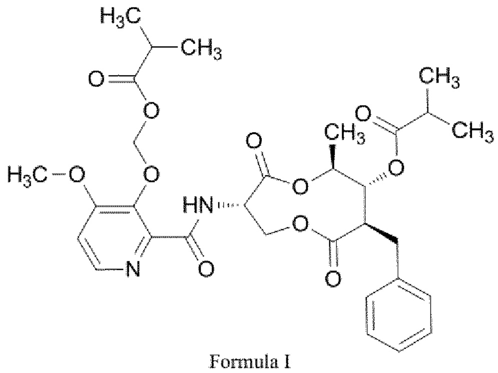

Formula I

,

and prothioconazole, wherein the weight ratio of the compound of Formula I to prothioconazole is from 100:195 to 130:195, and a phytologically acceptable carrier material,

wherein improved growth in crops is **characterized by** at least one of the effects selected from the group consisting of preventing or curing a disease caused by the pathogenic fungi *Rhynchosporium secalis* (RHYNSE), the causal agent of leaf blotch of barley, and improving plant physiology, wherein improved plant physiology is **characterized by** at least one of the effects selected from the group consisting of improved greening and enhanced yield.

**2.** The use according to Claim 1, wherein improved growth is **characterized by** improved plant physiology, wherein improved plant physiology is **characterized by** at least one of the effects selected from the group consisting of improved greening and enhanced yield.

**3.** The use according to Claim 2, wherein the improved plant physiology is **characterized by** increased yield.

**4.** The use according to Claim 2, wherein the improved plant physiology is **characterized by** increased greening of plant tissue.

**5.** A method for improving growth in crops, the method comprising: applying a fungicidally effective amount of a synergistic mixture comprising a compound of Formula I:

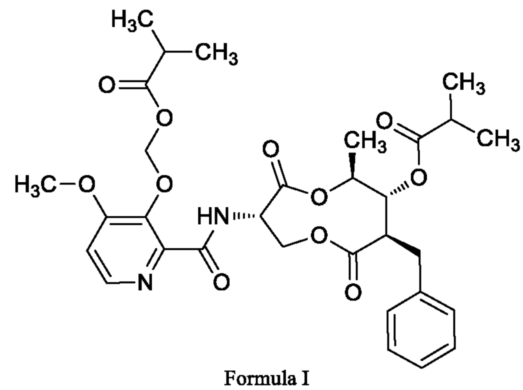

**Formula I**

,

and prothioconazole, wherein said effective amount is applied to at least one of a plant, an area adjacent to a plant, soil adapted to support growth of a plant, a root of a plant, and foliage of a plant, wherein the weight ratio of the compound of Formula I to prothioconazole is from 100:195 to 130:195, wherein the synergistic mixture is effective against leaf blotch of barley caused by the pathogenic fungi is *Rhynchosporium secalis.*

**Patentansprüche**

**1.** Verwendung einer synergistischen Zusammensetzung zur Bereitstellung eines verbesserten Wachstums von Kulturpflanzen, wobei die Zusammensetzung eine synergistische Mischung, die eine fungizid wirksame Menge einer

Verbindung der Formel I:

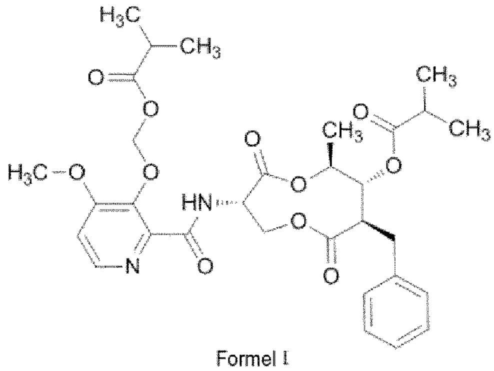

Formel I

und Prothioconazol umfasst, wobei das Gewichtsverhältnis der Verbindung der Formel I zu Prothioconazol 100:195 bis 130:195 beträgt, sowie ein phytologisch unbedenkliches Trägermaterial umfasst, wobei das verbesserte Wachstum von Kulturpflanzen durch mindestens eine der Wirkungen ausgewählt aus der Prävention oder Heilung einer die durch den pathogenen Pilz *Rhynchosporium secalis* (RHYNSE), den Verursacher der Blattfleckenkrankheit der Gerste, verursachten Krankheit, und der Verbesserung der Pflanzenphysiologie bestehenden Gruppe gekennzeichnet ist, wobei eine verbesserte Pflanzenphysiologie durch mindestens eine der Wirkungen ausgewählt aus der aus verbesserter Begrünung und erhöhtem Ertrag bestehenden Gruppe gekennzeichnet ist.

**2.** Verwendung nach Anspruch 1, wobei das verbesserte Wachstum durch eine verbesserte Pflanzenphysiologie gekennzeichnet ist, wobei eine verbesserte Pflanzenphysiologie durch mindestens eine der Wirkungen ausgewählt aus der aus verbesserter Begrünung und erhöhtem Ertrag bestehenden Gruppe gekennzeichnet ist.

**3.** Verwendung nach Anspruch 2, wobei die verbesserte Pflanzenphysiologie durch einen erhöhten Ertrag gekennzeichnet ist.

**4.** Verwendung nach Anspruch 2, wobei die verbesserte Pflanzenphysiologie durch eine erhöhte Begrünung des Pflanzengewebes gekennzeichnet ist.

**5.** Verfahren zur Verbesserung des Wachstums von Kulturpflanzen, wobei das Verfahren Folgendes umfasst: das Aufbringen einer fungizid wirksamen Menge einer synergistischen Mischung, die eine Verbindung der Formel I:

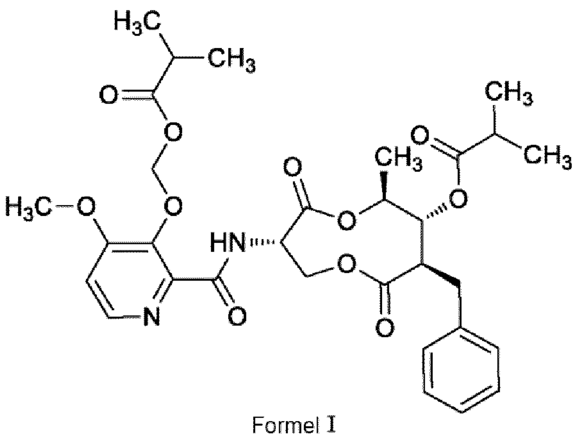

Formel I

und Prothioconazol umfasst, wobei die wirksame Menge auf eine Pflanze, einen an eine Pflanze angrenzenden Bereich, einen Boden, der geeignet ist, das Wachstum einer Pflanze zu unterstützen, eine Wurzel einer Pflanze und/oder das Blattwerk einer Pflanze aufgebracht wird, wobei das Gewichtsverhältnis der Verbindung der Formel I zu Prothioconazol 100:195 bis 130:195 beträgt, wobei die synergistische Mischung gegen die durch den pathogenen Pilz *Rhynchosporium secalis* verursachte Blattfleckenkrankheit der Gerste wirksam ist.

## Revendications

**1.** Utilisation d'une composition synergique pour fournir une croissance améliorée dans des cultures, la composition comprenant un mélange synergique comprenant une quantité efficace sur le plan fongicide d'un composé de formule I :

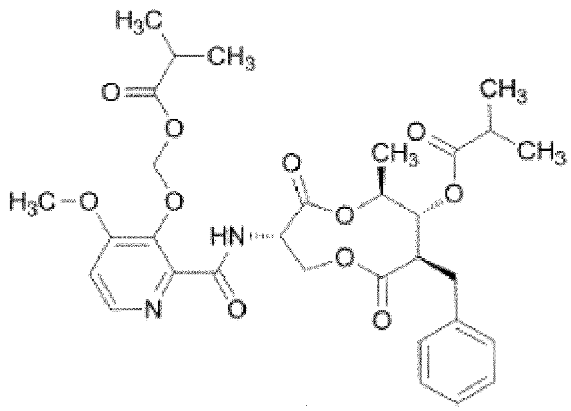

formule I,

et du prothioconazole, le rapport en poids du composé de formule I sur prothioconazole étant de 100 : 195 à 130 : 195, et un matériau de support acceptable sur le plan phytologique,
une croissance améliorée dans des cultures étant **caractérisée par** au moins l'un des effets choisis dans le groupe constitué par la prévention ou la guérison d'une maladie causée par le champignon pathogène *Rynchosporium secalis* (RHYNSE), l'agent causal de la septoriose de l'orge, et une amélioration de la physiologie végétale, une physiologie végétale améliorée étant **caractérisée par** au moins l'un des effets choisis dans le groupe constitué par un verdissement amélioré et un rendement augmenté.

**2.** Utilisation selon la revendication 1, une croissance améliorée étant **caractérisée par** une physiologie végétale améliorée, la physiologie végétale améliorée étant **caractérisée par** au moins l'un des effets choisis dans le groupe constitué par un verdissement amélioré et un rendement augmenté.

**3.** Utilisation selon la revendication 2, la physiologie végétale améliorée étant **caractérisée par** un rendement amélioré.

**4.** Utilisation selon la revendication 2, la physiologie végétale améliorée étant **caractérisée par** un verdissement amélioré de tissu végétal.

**5.** Procédé pour l'amélioration de la croissance dans des cultures, le procédé comprenant : une application d'une quantité efficace sur le plan fongicide d'un mélange synergique comprenant un composé de formule I :

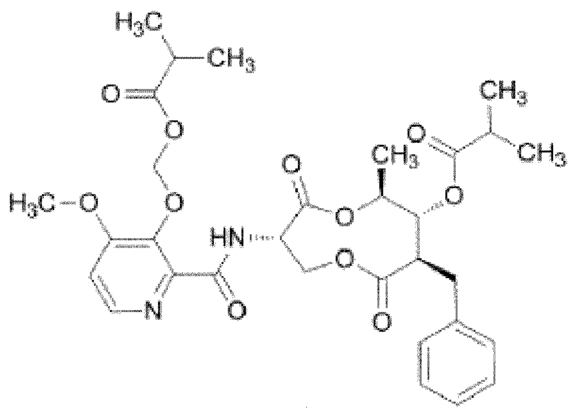

formule I,

et du prothioconazole, ladite quantité efficace étant appliquée sur au moins l'un parmi un végétal, une zone adjacente à un végétal, un sol adapté pour soutenir la croissance d'un végétal, une racine d'un végétal, et un feuillage d'un végétal, le rapport en poids du composé de formule I sur prothioconazole étant de 100 : 195 à 130 : 195, le mélange synergique étant efficace contre la septoriose de l'orge causée par le champignon pathogène qui est *Rynchosporium secalis.*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20140187590 A1
- US 20110082160 A1
- WO 2015103161 A1


### Non-patent literature cited in the description


- **COLBY, S. R.** Calculation of the synergistic and antagonistic response of herbicide combinations. *Weeds,* 1967, vol. 15, 20-22